# EUROPÄISCHE PATENTSCHRIFT

(11) **EP 0 978 416 B1**
(45) Veröffentlichungstag und Bekanntmachung des Hinweises auf die Patenterteilung: **05.10.2005**
(21) Anmeldenummer: 99114979.0
(22) Anmeldetag: 31.07.1999
(51) Int. Cl.: B60Q 1/04

(54) **Vorrichtung zur justierbaren Befestigung eines Scheinwerfers**
Device for adjustably fixing a headlight
Dispositif pour la fixation réglable d'un phare

(30) Priorität: 04.08.1998 DE 19835047
(43) Veröffentlichungstag der Anmeldung: 09.02.2000
(73) Patentinhaber: Hella KGaA Hueck & Co., 59552 Lippstadt (DE)
(72) Erfinder: Krukenbaum, Friedrich, 59069 Hamm (DE); Schäfers, Franz, 33106 Paderborn (DE)

(56) Entgegenhaltungen:
- DE-A- 2 721 554
- DE-C- 3 540 724
- DE-C- 3 629 124
- DE-C- 19 625 976
- FR-A- 2 594 761
- FR-A- 2 727 479
- US-A- 5 230 130

## Beschreibung

Die Erfindung betrifft einen Scheinwerfer zur justierbaren Befestigung nach dem Oberbegriff des Patenanspruchs 1.

Aus der DE 41 35 773 A1 ist ein Scheinwerfer mit einer Vorrichtung zur justierbaren Befestigung eines Gehäuses des Scheinwerfers in einer Karosserieöffnung eines Fahrzeugs bekannt. Die Vorrichtung zur justierbaren Befestigung weist eine Schraubenverbindung auf, mit welcher ein Tragelement eines Gehäuses eines Scheinwerfers in einer Karosserieöffnung eines Fahrzeuges unverstellbar festsetzbar ist. Das Tragelement weist eine Nut auf, in deren Grund eine Befestigungsöffnung eingebracht ist, durch welche der Befestigungsbolzen der Schraubenverbindung hindurchgeht. Ein Kopf der Schraubenverbindung liegt an einer zwischen Kopf und dem Tragelement angeordneten Unterlegscheibe an. In der zentralen Öffnung der Unterlegscheibe ist der Befestigungsbolzen in Längsausdehnung der Nut weitgehend spielfrei gehalten. Die Unterlegscheibe liegt mit schmalen Seitenflächen an den sich zugewandten parallel zueinander verlaufenden Flächenabschnitten der Nut an.

Nachteilig bei dieser bekannten Vorrichtung ist, dass auch im unteren Bereich des Scheinwerfers eine Justierung nur mit nicht fest angezogenen Schrauben möglich ist. Soll ein Fahrzeugscheinwerfer beispielsweise zu einem den unteren Bereich abdeckenden Stoßfänger justiert werden, ist bei montiertem Stoßfänger ein Festziehen der unteren Schraubenverbindung nicht mehr möglich.

Aus der DE 36 29 124 C1 ist ein Scheinwerfer mit einer Vorrichtung zur justierbaren Befestigung eines Gehäuses des Scheinwerfers in einer Karosserieöffnung eines Fahrzeugs bekannt. Hierzu ist in einem in vertikaler Richtung unteren Bereich des Gehäuses eine untere Schraubenverbindung in einem unteren Tragelement angeordnet. In einem oberen Bereich des Gehäuses ist eine in einem oberen Tragelement angeordnete obere Schraubenverbindung angeordnet. Die obere Schraubenverbindung umfasst einen vertikal verlaufenden Gewindestehbolzen, der mit einer vertikal verdrehbaren Einstellmutter zusammenwirkt, um eine Justierung des Scheinwerfergehäuses in vertikaler Richtung vornehmen zu können.

Aus der US 5 230 130 A ist ein Scheinwerfer mit einer in einem oberen Bereich des Scheinwerfergehäuses angeordneten oberen Schraubenverbindung bekannt, die einen Befestigungsschlitz umfasst zur Aufnahme eines Justierblocks. Der Justierblock ist bis zu einer untersten Position des Befestigungsschlitzes einsetzbar. Eine Justierung des Scheinwerfergehäuses in einer Karosserieöffnung eines Fahrzeugs ist hierdurch nicht vorgesehen.

Aufgabe der vorliegenden Erfindung ist es, einen Scheinwerfer mit einer Vorrichtung zur justierbaren Befestigung eines Gehäuses des Scheinwerfers in einer Karosserieöffnung eines Fahrzeugs derart weiterzubilden, dass ein solcher verschiebbarer Halter bereitgestellt wird, der die Justierung in einer etwa horizontal und quer zur Abstrahlrichtung des Scheinwerfers vorgesehenen Justierrichtung ermöglicht, so dass der Scheinwerfer auch bei der fest angezogenen unteren Schraubenverbindung immer noch justierbar ist.

Zur Lösung dieser Aufgabe weist die Erfindung die Merkmale des Patentanspruchs 1 auf.

Dadurch, dass die untere Schraubenverbindung über einen in einer horizontal und quer zur Abstrahlrichtung des Scheinwerfers verlaufenden Justierrichtung verschiebbaren Halter mit dem unteren Tragelement des Gehäuses verbunden ist, kann auch bei fest angezogener unterer Schraubenverbindung das Gehäuse mit seinem unteren Tragelement in Justierrichtung verschoben werden. Somit ist es möglich, den Scheinwerfer in seinem unteren Bereich festzuschrauben, einen die untere Schraubenverbindung abdeckenden Stoßfänger zu montieren und trotzdem noch eine Justierung in horizontaler und quer zur Abstrahlrichtung des Scheinwerfers verlaufenden Justierrichtung vorzunehmen. Nach erfolgter Justierung kann dann die im oberen Bereich des Gehäuses angeordnete obere Schraubenverbindung fest angezogen werden, so dass der Scheinwerfer fest mit der Karosserie verbunden ist.

Gemäß einer bevorzugten Ausführungsform der Erfindung sind zu einer optimalen Fixierung des Scheinwerfers im unteren Bereich des Gehäuses in einem Abstand zueinander zwei untere Schraubenverbindungen in zwei unteren Tragelementen angeordnet. Im oberen Bereich des Gehäuses sind ebenfalls in einem Abstand zueinander zwei obere Schraubenverbindungen in zwei oberen Tragelementen angeordnet. Es ist aber beispielsweise auch möglich, zwei untere Tragelemente und ein oberes Tragelement oder zwei obere Tragelemente und ein unteres Tragelement zu verwenden.

Nach einer weiteren bevorzugten Ausführungsform der Erfindung wird der Halter mit zwei einander gegenüberliegenden Führungsnuten längsverschieblich in einer Längsnut des unteren Tragelementes geführt.

Durch die Führung des Halters in Führungsnuten wird vor Montage des Scheinwerfers ein Herausfallen des Halters aus der Längsnut des unteren Tragelementes vermieden.

Nach einer weiteren bevorzugten Ausführungsform der Erfindung ist der Halter in einer quer zu einer Schiebestellung angeordneten Montagestellung in die Längsnut des unteren Tragelementes einsetzbar und durch Verdrehen um 90° in die Schiebestellung bringbar.

Durch Verdrehen des Halters ist eine einfache Montage bei sicherem Sitz des Halters in der Längsnut möglich.

Gemäß einer weiteren bevorzugten Ausführungsform der Erfindung sind auf einer der Scheinwerferrückseite abgewandten Vorderseite des unteren Tragelementes parallel zur Längsrichtung der Längsriut einander gegenüberliegende Führungsstege angeordnet. Der Halter weist auf einer der Vorderseite des Tragelementes benachbarten Außenwandung zwei gegen die Führungsstege anschlagbare Stirnflächen auf.

Durch die Führungsstege wird zum einen eine Art Verrastung des Halters in der Längsnut bzw. in dem Tragelement ermöglicht und zum anderen wird die Führung verbessert.

Nach einer weiteren bevorzugten Ausführungsform der Erfindung weisen die Führungsnuten eine von einer Außenwandung und einer Innenwandung begrenzte Basisfläche auf. Die einander gegenüberliegenden Basisflächen der Führungsnuten sind mit ihren diagonal gegenüberliegenden Enden über Viertelkreisbögen mit rechtwinklig zu den Basisflächen angeordneten Seitenflächen verbunden.

Dadurch, daß die Basisflächen über Viertelkreisbögen in die Seitenflächen übergehen, ist es möglich, den Halter von seiner Montagestellung in die Schiebestellung zu drehen.

Nach einer weiteren bevorzugten Ausführungsform der Erfindung weist die Außenwandung in einem den Viertelkreisbogen benachbarten Bereich eine von der Vorderseite des Tragelementes abgehobene Anlaufschräge auf.

Durch die Anlaufschräge wird das Verdrehen des Halters von seiner Montagestellung in die Schiebestellung erleichtert.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

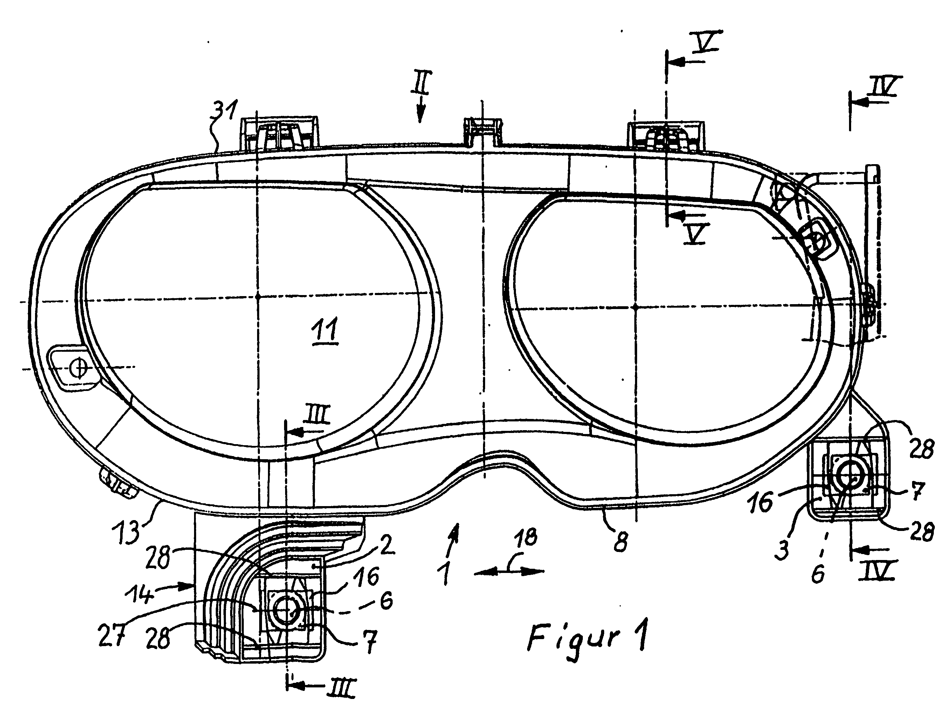

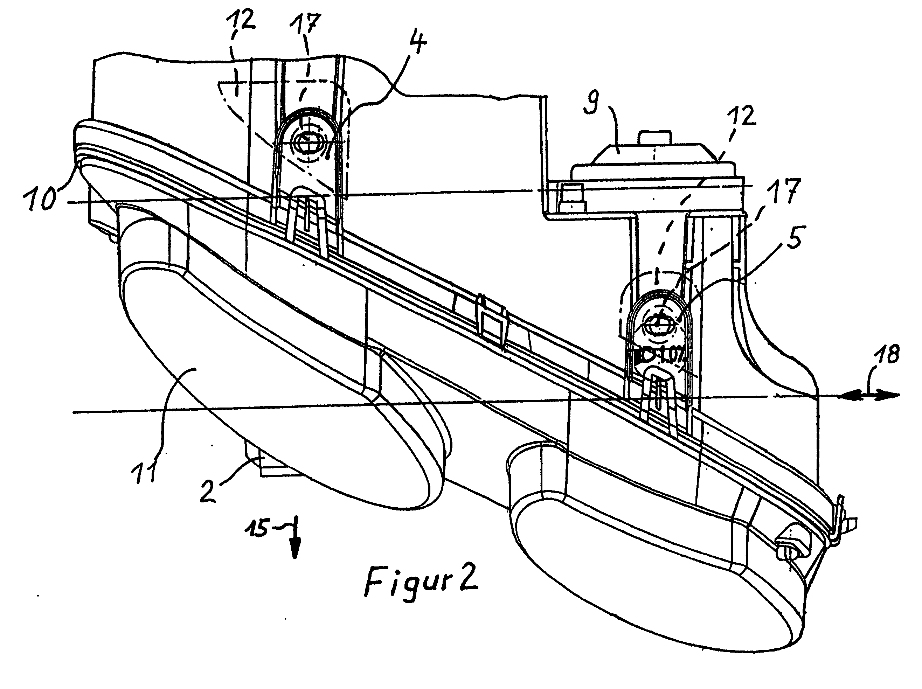

- Figur 1:: Eine Vorderansicht eines Scheinwerfers,

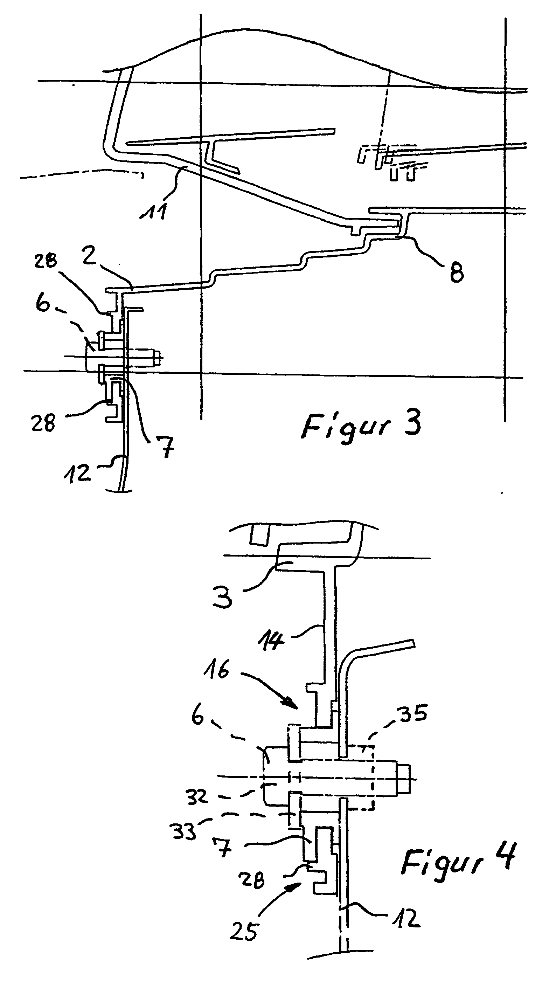

- Figur 2:: eine Draufsicht auf den Scheinwerfer von Figur 1 aus Richtung II,
- Figur 3:: eine Seitenansicht des Scheinwerfers von Figur 1 entlang der Linie III - III geschnitten,

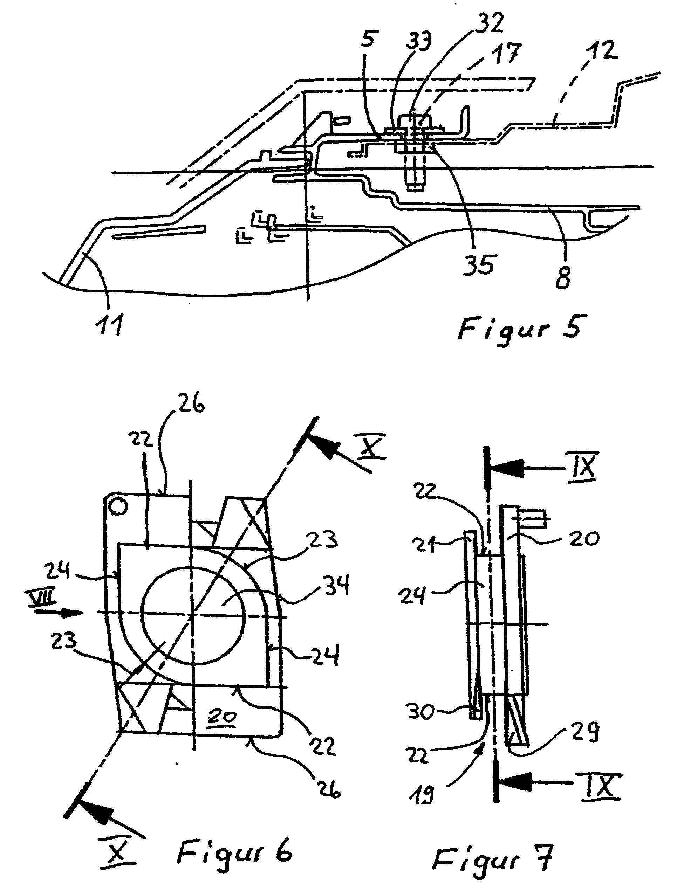

- Figur 4:: eine Seitenansicht des Scheinwerfers von Figur 1 entlang der Linie IV - IV geschnitten in vergrößerter Darstellung,
- Figur 5:: eine Seitenansicht des Scheinwerfers von Figur 1 entlang der Linie V - V geschnitten,
- Figur 6:: eine Vorderansicht eines Halters in vergrößerter Darstellung,
- Figur 7:: eine Seitenansicht des Halters von Figur 6 aus Richtung VII,

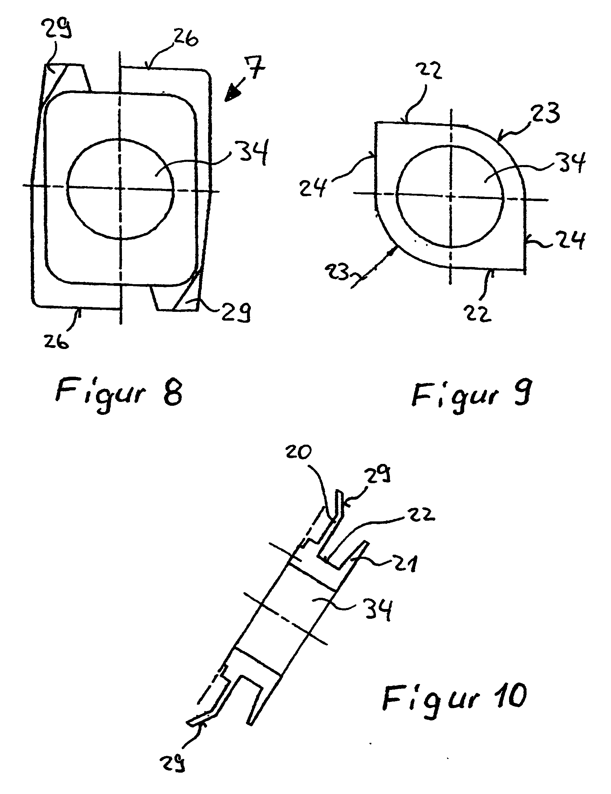

- Figur 8:: eine Rückansicht des Halters von Figur 6,
- Figur 9:: eine Vorderansicht des Halters von Figur 7, entlang der Linie IX - IX geschnitten und
- Figur 10:: eine Seitenansicht des Halters von Figur 6 entlang der Linie X - X geschnitten.

Ein Scheinwerter mit einer justierbaren Befestigung eines Gehäuses (8) weist ein unteres linkes Tragelement (2), ein unteres rechtes Tragelement (3), ein oberes linkes Tragelement (4), ein oberes rechtes Tragelement (5), unteren Schraubenverbindungen (6), oberen Schraubenverbindungen (17) und Haltern (7) auf.

Der Scheinwerfer (1) weist ferner ein Gehäuse (8) auf, das an einer einer Scheinwerferrückseite (9) abgewandten Gehäusevorderseite (10) von einer Streuscheibe (11) verschlossen wird. Der Scheinwerfer (1) bzw. das Gehäuse (8) wird über die Tragelemente (2, 3, 4, 5) mit einer Karosserie (12) eines nicht dargestellten Fahrzeuges über Schraubverbindungen (6, 17) verbunden.

Die unteren Tragelemente (2, 3) sind über Halter (7) und die unteren Schraubverbindungen (6) mit der Karosserie (12) verbunden. Die unteren Tragelemente (2, 3) sind in einem in vertikaler Richtung unteren Bereich (13) des Gehäuses (8) angeordnet und weisen im wesentlichen vertikal ausgerichtete Wandungsteile (14) auf, die etwa quer zur Abstrahlrichtung (15) des Scheinwerfers (1) angeordnet sind. Die Wandungselemente (14) der Tragelemente (2, 3) weisen eine etwa in horizontaler quer zur Abstrahlrichtung (15) verlaufenden Justierrichtung (18) verlaufende Längsnut (16) auf, in der der Halter (7) längsverschieblich geführt wird.

Der Halter (7) weist einander gegenüberliegende Führungsnuten (19) auf, mit denen er in der Längsnut (16) des unteren Tragelementes (2, 3) geführt bzw. verschieblich gelagert wird. Die Führungsnuten (19) weisen eine von einer Außenwandung (20) und einer Innenwandung (21) begrenzte Basisfläche (22) auf. Die einander gegenüberliegenden Basisflächen (22) sind an ihren diagonal gegenüberliegenden Enden über Viertelkreisbögen (23) mit rechtwinklig zu den Basisflächen (22) angeordneten Seitenflächen (24) verbunden. Der Halter (7) weist auf der Außenwandung (20), die einer der Scheinwerferrückseite (9) abgewandten Vorderseite (25) des unteren Tragelementes (2, 3) benachbart ist, zwei parallel zu den Basisflächen (22) verlaufende Stirnflächen (26) auf. Die Stirnflächen (26) schlagen in der Schiebestellung des Halters (7) gegen zwei parallel zur Längsrichtung bzw. Längsachse (27) der Längsnut (16) angeordnete Führungsstege (28) an. Die Außenwandung (20) weist in einem den Viertelkreisbögen (23) benachbarten Bereich jeweils eine von der Vorderseite (25) des unteren Tragelementes (2, 3) abgehobene Anlaufschräge (29) auf. Der Anlaufschräge (29) benachbart weist die Innenwandung (21) der Führungsnut (19) ebenfalls eine Anlaufschräge (30) auf.

Der Halter (7) ist in einer quer zur Schiebestellung angeordneten Montagestellung in die Längsnut (16) einsetzbar und durch Verdrehen um 90° in die Schiebestellung bringbar.

Die oberen Tragelemente (4, 5) sind in einem in vertikaler Richtung oberen Bereich (31) des Gehäuses (8) in einer horizontalen Ebene angeordnet.

Zur Montage eines Scheinwerfers (1) wird das Gehäuse (8) mit seinen in den unteren Tragelementen (2, 3) angeordneten Haltern (7) durch die unteren Schraubverbindungen (6) mit der Karosserie (12) fest verschraubt.

Dazu wird jeweils eine Schraube (32) mit einer Unterlegscheibe (33) versehen, durch eine Durchgangsbohrung (34) des Halters (7) gesteckt und mit einer an der Karosserie (12) angeordneten Schweißmutter (35) verschraubt. Es ist aber auch möglich, die Schraube (32) direkt mit der Karosserie (12) zu verschrauben.

Anschließend werden die oberen Tragelemente (4, 5) des Gehäuses (8) über ihre oberen Schraubenverbindungen (17) mit der Karosserie (12) handfest verbunden. Nunmehr kann ein nicht dargestellter Stoßfänger, der die unteren Schraubverbindungen (6) abdeckt, fest montiert und der Scheinwerfer (1) dabei ausgerichtet werden. Nach Ausrichten des Scheinwerfers (1) werden die oberen Schraubverbindungen (17) fest angezogen.

## Patentansprüche

1. Scheinwerfer mit einer justierbaren Befestigung eines Gehäuses (8) des Scheinwerfers in einer Karosserieöffnung eines Fahrzeuges mit mindestens einer in einem in vertikaler Richtung unteren Bereich des Gehäuses (8) in einem unteren Tragelement (2, 3) angeordneten unteren Schraubenverbindung (6) und mindestens einer in einem oberen Bereich des Gehäuses (8) in einem oberen Tragelement (4, 5) angeordneten oberen Schraubenverbindung (17), wobei die untere Schraubenverbindung (6) über einen verschiebbaren Halter (7) mit dem unteren Tragelement (2, 3) des Gehäuses (8) verbunden ist, **dadurch gekennzeichnet, dass** der Halter (7) in dem unteren Tragelement (2, 3) in einer horizontal und quer zur Abstrahlrichtung des Scheinwerfers (1) verlaufenden Justierrichtung (18) verschieblich gelagert ist, so dass das Gehäuse (8) mit seinem unteren Tragelement (2, 3) in Justierrichtung (18) verschoben werden kann.

2. Scheinwerfer nach Anspruch 1, **dadurch gekennzeichnet, dass** im unteren Bereich (13) des Gehäuses (8) in einem Abstand zueinander zwei untere Schraubenverbindungen (6) in zwei unteren Tragelementen (2, 3) angeordnet sind.

3. Scheinwerfer nach Anspruch 1 oder 2, **dadurch gekennzeichnet, dass** im oberen Bereich (31) des Gehäuses (8) in einem Abstand zueinander zwei obere Schraubenverbindungen (17) in zwei oberen Tragelementen (4, 5) angeordnet sind.

4. Scheinwerfer nach einem der Ansprüche 1 bis 3, **dadurch gekennzeichnet, dass** der Halter (7) mit zwei einander gegenüberliegenden Führungsnuten (19) längsverschieblich in einer Längsnut (16) des unteren Tragelementes (2, 3) geführt wird.

5. Scheinwerfer nach Anspruch 4, **dadurch gekennzeichnet, dass** der Halter (7) in einer quer zu einer Schiebeeinstellung angeordneten Montagestellung in die Längsnut (16) einsetzbar und durch Verdrehen um 90° in die Schiebestellung bringbar ist.

6. Scheinwerfer nach Anspruch 4 oder 5, **dadurch gekennzeichnet, dass** auf einer einer Scheinwerferrückseite (9) abgewandten Vorderseite (25) des unteren Tragelementes (2, 3) parallel zur Längsrichtung der Längsseite (16) zwei einander gegenüberliegende Führungsstege (28) angeordnet sind.

7. Scheinwerfer nach Anspruch 6, **dadurch gekennzeichnet, dass** der Halter (7) auf einer der Vorderseite (25) des unteren Tragelementes (2, 3) benachbarten Außenwandung (20) zwei gegen die Führungsstege (28) anschlagbare Stirnflächen (26) aufweist.

8. Scheinwerfer nach einem der Ansprüche 4 bis 7, **dadurch gekennzeichnet, dass** die Führungsnuten (19) eine von einer Außenwandung (20) du einer Innenwandung (21) begrenzte Basisfläche (22) aufweist.

9. Scheinwerfer nach Anspruch 8, **dadurch gekennzeichnet, dass** die einander gegenüberliegenden Basisflächen (22) der Führungsnuten (19) an ihren diagonal gegenüberliegenden Enden über Viertelkreisbögen (23) mit rechtwinklig zu den Basisflächen (22) angeordneten Stirnflächen (24) verbunden sind.

10. Scheinwerfer nach Anspruch 9, **dadurch gekennzeichnet, dass** die Außenwandung (20) in einem den Vierteilkreisbögen (23) benachbarten Bereich jeweils eine von der Vorderseite (25) des unteren Tragelementes (2, 3) abgehobene Anlaufschräge (29) aufweist.

## Claims

1. Headlight with adjustable fixing of a housing (8) of the headlight in a body opening of a vehicle with at least one lower screw connection (17) arranged in a lower region of the housing (8), viewed in the vertical direction, in a lower supporting element (2, 3), and with at least one upper screw connection (17) arranged in an upper region of the housing (8) in an upper supporting element (4, 5), wherein the lower screw connection (6) is connected by a displaceable bracket (7) to the lower supporting element (2, 3) of the housing (8), **characterised in that** the bracket (7) is displaceably mounted in the lower supporting element (2, 3) in an adjusting device (8) running horizontally and transversely to the direction of radiation of the headlight (8) so that the housing (8) can be displaced with its lower supporting element (2,3) in the direction of adjustment (18).

2. Headlight according to Claim 1, **characterised in that** two lower screw connections (6) are arranged in two lower supporting elements (2, 3) in the lower region (13) of the housing (8) at a certain distance from each other.

3. Headlight according to Claim 1 or 2, **characterised in that** two upper screw connections (17) are arranged in two upper supporting elements (4, 5) in the upper region (31) of the housing (8) at a certain distance to each other.

4. Headlight according to one of Claims 1 to 3, **characterised in that** the bracket (7) is guided with two opposing guide grooves (19) longitudinally and displaceably in a longitudinal groove (16) of the lower supporting element (2, 3).

5. Headlight according to Claim 4, **characterised in that** the bracket (7) can be inserted in the longitudinal groove (16) in an assembly position arranged transversely to a sliding adjustment, and can be brought to the sliding position by means of a 90° distortion.

6. Headlight according to Claim 4 or 5, **characterised in that** two opposing guide bridges (28) are arranged on a front side (25) of the lower supporting element (2, 3), facing away from a rear side (9) of the headlight, parallel with the longitudinal direction of the longitudinal side (16).

7. Headlight according to Claim 6, **characterised in that** the bracket (7) exhibits two front faces (26) which can be fixed against the guide bridges (28) on an outer wall adjacent to the front side (25) of the lower supporting element (2, 3).

8. Headlight according to one of Claims 4 to 7, **characterised in that** the guide grooves (19) exhibit a base surface (22) limited by the outer wall (20) if an inner wall (21).

9. Headlight according to Claim 8, **characterised in that** the opposing base surfaces (22) of the guide grooves (19) are connected at their diagonally opposing ends by quadrant arcs (23) to front faces (24) arranged at right angles to the base surfaces (22).

10. Headlight according to Claim 9, **characterised in that** the outer wall (2) exhibits a stop slope (29) that is raised from the front side (25) of the lower supporting element (2, 3).

## Revendications

1. Phare, avec une fixation ajustable d'un boîtier (8) du phare dans une ouverture ménagée dans la carrosserie d'un véhicule, avec au moins un assemblage inférieur par vis (6) disposé dans une région inférieure du boîtier (8) en direction verticale dans un élément support inférieur (2, 3) et avec au moins un assemblage supérieur par vis (17) disposé dans une région supérieure du boîtier (8) en direction verticale dans un élément support supérieur (4, 5), l'assemblage inférieur par vis (6) étant relié à l'élément support inférieur (2, 3) du boîtier (8) par l'intermédiaire d'un dispositif de maintien coulissant (7), **caractérisé en ce que** le dispositif de maintien (7) est logé de façon coulissante dans l'élément support inférieur (2, 3), dans une direction d'ajustage (18) s'étendant à l'horizontale et à la transversale de la direction de rayonnement du phare (8), pour permettre de déplacer le boîtier (8) avec son élément support inférieur (2, 3) dans la direction d'ajustage (18).

2. Phare selon la revendication 1, **caractérisé en ce que** deux assemblages inférieurs par vis (6) sont disposés dans deux éléments support inférieurs (2, 3), dans la région inférieure (13) du boîtier (8), à une distance l'un par rapport à l'autre.

3. Phare selon la revendication 1 ou 2, **caractérisé en ce que** deux assemblages supérieurs par vis (17) sont disposés dans deux éléments supports supérieurs (4, 5) dans la région supérieure (31) du boîtier (8), à une distance l'un par rapport à l'autre.

4. Phare selon l'une quelconque des revendications 1 à 3, **caractérisé en ce que** le dispositif de maintien (7) est guidé de façon coulissable en longueur dans une rainure longitudinale (16) de l'élément support inférieur (2, 3), par deux rainures de guidage opposées (19).

5. Phare selon la revendication 4, **caractérisé en ce que** le dispositif de maintien (7) est insérable dans la rainure longitudinale (16) dans une position de montage transversale à une position coulissante et peut être amené en position coulissante par rotation à 90°.

6. Phare selon la revendication 4 ou 5, **caractérisé en ce que** sur une face avant (25) de l'élément support inférieur (2, 3) qui est opposée à la face arrière du phare (9), deux barrettes de guidage (28) opposées sont disposées à la parallèle de la direction longitudinale du côté longitudinal (16).

7. Phare selon la revendication 6, **caractérisé en ce que** sur une paroi extérieure (20) adjacente à la face avant (25) de l'élément support inférieur (2, 3), le dispositif de maintien (7) comporte deux surfaces frontales (26) pouvant se mettre en butée contre les barrettes de guidage (28).

8. Phare selon l'une quelconque des revendications 4 à 7, **caractérisé en ce que** les rainures de guidage (19) comportent une surface de base (22) délimitée par une paroi extérieure (20) et par une paroi intérieure (21).

9. Phare selon la revendication 8, **caractérisé en ce que** sur leurs extrémités (22) opposées en diagonale, les surfaces de base (22) opposées des rainures de guidage (19) sont reliées par des quarts de cercles (23) avec des surfaces frontales (24) disposées à angle droit par rapport aux surfaces de base (22).

10. Phare selon la revendication 9, **caractérisé en ce que** dans une région adjacente aux quarts de cercle (23), la paroi extérieure (20) comporte respectivement une inclinaison de démarrage (29) relevée par rapport à la face avant (25) de l'élément support inférieur (2, 3).
